# EUROPÄISCHE PATENTSCHRIFT

(11) **EP 1 789 317 B1**
(45) Veröffentlichungstag und Bekanntmachung des Hinweises auf die Patenterteilung: **21.04.2010**
(21) Anmeldenummer: 05735766.7
(22) Anmeldetag: 29.04.2005
(51) Int. Cl.: B64D 11/06, B60N 2/48, A47C 7/38

(54) **SITZ, INSBESONDERE FLUGGASTSITZ**
SEAT, IN PARTICULAR AIRCRAFT PASSENGER SEAT
SIEGE, EN PARTICULIER SIEGE DE PASSAGER D'AVION

(30) Priorität: 14.09.2004 DE 102004044243
(43) Veröffentlichungstag der Anmeldung: 30.05.2007
(73) Patentinhaber: Recaro Aircraft Seating GmbH & Co. KG, 74523 Schwäbisch Hall (DE)
(72) Erfinder: SCHÜRG, Hartmut, 74523 Schwäbisch Hall (DE); FORGATSCH, Oliver, 88709 Meersburg (DE)
(74) Vertreter: Daub, Thomas
(86) Internationale Anmeldenummer: PCT/EP2005/004607
(87) Internationale Veröffentlichungsnummer: WO 2006/029659

(56) Entgegenhaltungen:
- EP-A- 0 250 378
- EP-A- 0 836 820
- DE-U1- 29 705 186
- US-A- 2 905 230
- US-A- 3 279 849

## Beschreibung

Die Erfindung bezieht sich auf einen Sitz, insbesondere Fluggastsitz, mit Sitzkomponenten wie Rückenlehne, Sitzteil, Sitzrahmen, Sitzpolster und Bezugsmaterial und mit Sitzzusatzteilen wie Kopfstütze, Arm- und Beinauflage.

Im Interesse der Verbesserung des dem Sitzbenutzer gebotenen Komforts, was insbesondere bei Fluggastsitzen für die gewerbliche Luftfahrt von großer Bedeutung ist, weil sich beispielsweise bei Langstreckenflügen ausgedehnte Reisezeiten ergeben, sind bekannte Sitze üblicherweise mit Einstellvorrichtungen ausgerüstet, die verschiedene Einstellpositionen von Sitzzusatzteilen ermöglichen. Der Sitzbenutzer ist dadurch in der Lage, Sitzzusatzteile, die komforterhöhende Bestandteile des Sitzes darstellen, in jeweils von ihm gewünschte Einstellpositionen zu bringen, die, den Bedürfnissen des Sitzbenutzers entsprechend, diesem größtmögliche Bequemlichkeit bieten.

Die Einstellvorrichtungen bekannter Sitze sind aufgrund der erforderlichen Stellmechanik kompliziert, benötigen großen Einbauraum und sind in der Herstellung teuer.

Der Erfindung liegt daher die Aufgabe zugrunde, einen Sitz zur Verfügung zu stellen, der die Möglichkeit der Positionseinstellung von Sitzzusatzteilen bietet, sich gleichwohl jedoch durch eine einfache Bauweise auszeichnet.

Eine gattungsgemäße Positionseinstellung ist aus dem Dokument EP-A-0 836 820 bekannt.

Erfindungsgemäß ist diese Aufgabe durch einen Sitz gelöst, der die Merkmale des Patentanspruches 1 in seiner Gesamtheit aufweist.

Dadurch, dass gemäß dem kennzeichnenden Teil des Anspruches 1 betreffende Sitzkomponenten mindestens eine Führungsbahn aufweisen, längs der ein zugeordnetes Sitzzusatzteil in gewünschte Einstellpositionen verschoben werden kann, in denen es jeweils reibschlüssig durch eine Klemmfeder lagegesichert ist, steht eine besonders einfache Einstellvorrichtung zur Verfügung, bei der keinerlei Stellmechanik erforderlich ist. Aufgrund des zwischen Sitzzusatzteil und Führungsbahn vorhandenen Reibschlusses ist der Sitzbenutzer in der Lage, das gewünschte Sitzzusatzteil manuell gegen die hemmende Wirkung des Reibschlusses in eine gewünschte Einstellposition zu verschieben, in der das Sitzzusatzteil, ohne dass weitere Maßnahmen oder Handhabungen erforderlich wären, festgelegt bleibt. Es versteht sich, dass die Stärke des wirkenden Reibschlusses so gewählt ist, dass das Sitzzusatzteil einerseits mit mäßigem Kraftaufwand verschiebbar ist, es jedoch in der erreichten, gewünschten Einstellposition für den jeweiligen Gebrauchszweck hinreichend fest gesichert ist.

Bei besonders vorteilhaften Ausführungsbeispielen, die sich durch eine besonders einfache, kostengünstig herstellbare Bauweise auszeichnen, ist die Führungsbahn durch einen in Führungsrichtung verlaufenden Rand des Bezugsmaterials gebildet.

Insbesondere bei Ausführungsbeispielen, bei denen die Führungsbahn sich innerhalb des Umrisses eines flächigen Bereiches des Bezugsmaterials erstreckt, kann im Bezugsmaterial zumindest ein in Führungsrichtung verlaufender Schlitz ausgebildet sein, dessen einer Rand die Führungsbahn bildet.

Damit es sich um einen "verdeckten" Schlitz handelt, können sich hierbei die an den Schlitz angrenzenden Ränder des Bezugsmaterials geringfügig übergreifen, wobei der an der so gebildeten Überlappung oben liegende Rand des Bezugsmaterials die Führungsbahn bildet.

Zur Bildung des Reibschlusses zwischen Sitzzusatzteil und Führungsbahn ist eine eine Klemmkraft zwischen Führungsbahn und verschiebbarem Sitzzusatzteil erzeugende Klemmeinrichtung vorhanden.

Die Klemmeinrichtung ist eine die Klemmkraft erzeugende Klemmfeder mit Federschenkeln, die den die Führungsbahn bildenden Rand des Bezugsmaterials zwischen sich klemmen und eine betriebssichere Bauweise darstellt.

Wenn es sich bei dem lageeinstellbaren Sitzzusatzteil beispielsweise um eine Kopfstütze und/oder Lordosenstütze handelt, die längs der Rückenlehne des Sitzes verschiebbar ist, können zwei in Längsrichtung der Rückenlehne zueinander parallel verlaufende, den Seitenrändern der Rückenlehne benachbarte Schlitze vorgesehen sein, wobei das zwischen den Schlitzen verlaufende Bezugsmaterial an der Überlappung der Schlitze das oben liegende Bezugsmaterial bildet, dessen jeweiliger Rand als Führungsbahn für ein an beiden Schlitzen längs verschiebbar geführtes Sitzzusatzteil bildet, beispielsweise einer Kopfstütze, die, nach Verschiebung gegen das untere Ende der Rückenlehne hin, gegebenenfalls auch als Lordosenstütze dienen kann.

Nachstehend ist die Erfindung anhand von in der Zeichnung dargestellten Ausführungsbeispielen im einzelnen erläutert. Es zeigen:
- Fig. 1 eine stark schematisch vereinfachte Vorderansicht einer Fluggast-Sitzreihe mit zwei Sitzen gemäß einem Ausführungsbeispiel der Erfindung;
- Fig. 2 eine entsprechend vereinfacht gezeichnete Seitenansicht der Sitzreihe von Fig. 1;
- Fig. 3 eine vergrößert gezeichnete Teilseitenansicht der in Fig. 2 mit III bezeichneten Einzelheit;
- Fig. 4 einen gegenüber Fig. 1 und 2 ebenfalls in größerem Maßstab gezeichneten Teilschnitt entsprechend der in Fig. 1 mit IV bezeichneten Schnittebene und
- Fig. 5 eine der Fig. 4 entsprechende Darstellung, die ein zweites Ausführungsbeispiel verdeutlicht.

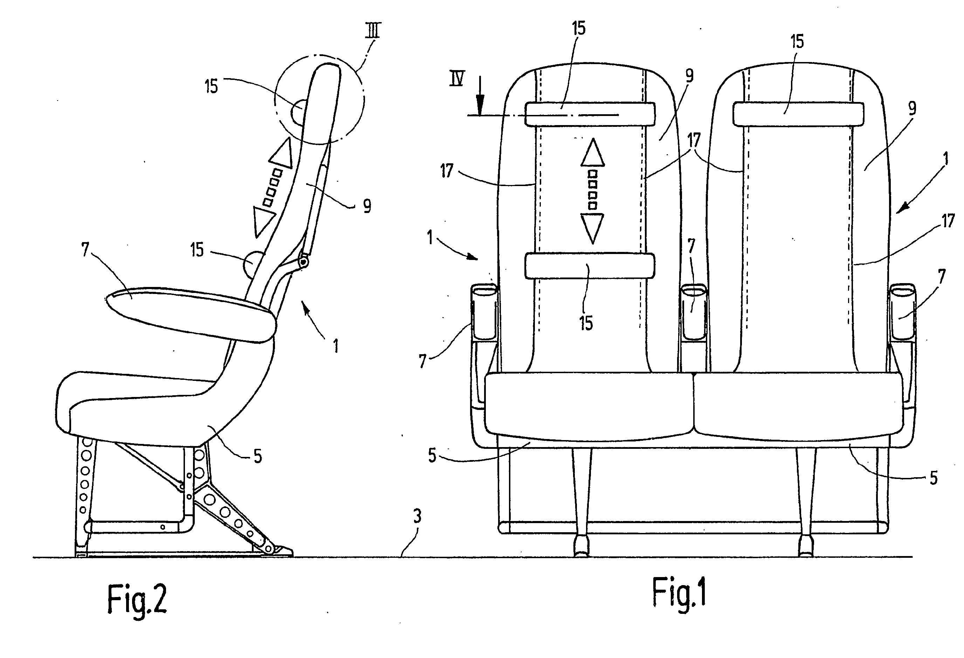

In Fig. 1 und 2 ist eine Fluggast-Sitzreihe mit zwei nebeneinander liegenden Sitzen dargestellt, die als Ganzes jeweils mit 1 bezeichnet sind und ein Ausführungsbeispiel der vorliegenden Erfindung verkörpern. In der bei Fluggastsitzen üblicher Weise weisen die Sitze 1 ein auf dem Kabinenboden 3 aufgeständertes Sitzteil 5, Armlehnen 7 und Rückenlehnen 9 auf. Die jeweilige Sitzpolsterung von Sitzteil 5 und Rückenlehne 9 ist mit einem Bezugsmaterial überzogen, von dem in den Fig. 1 sowie 3 bis 5 lediglich das das Rückenlehnenpolster 11 überdeckende Bezugsmaterial mit 13 bezeichnet ist.

Bei dem Bezugsmaterial 13 kann es sich um einen textilen Werkstoff, um Leder, Kunstleder oder dergleichen handeln.

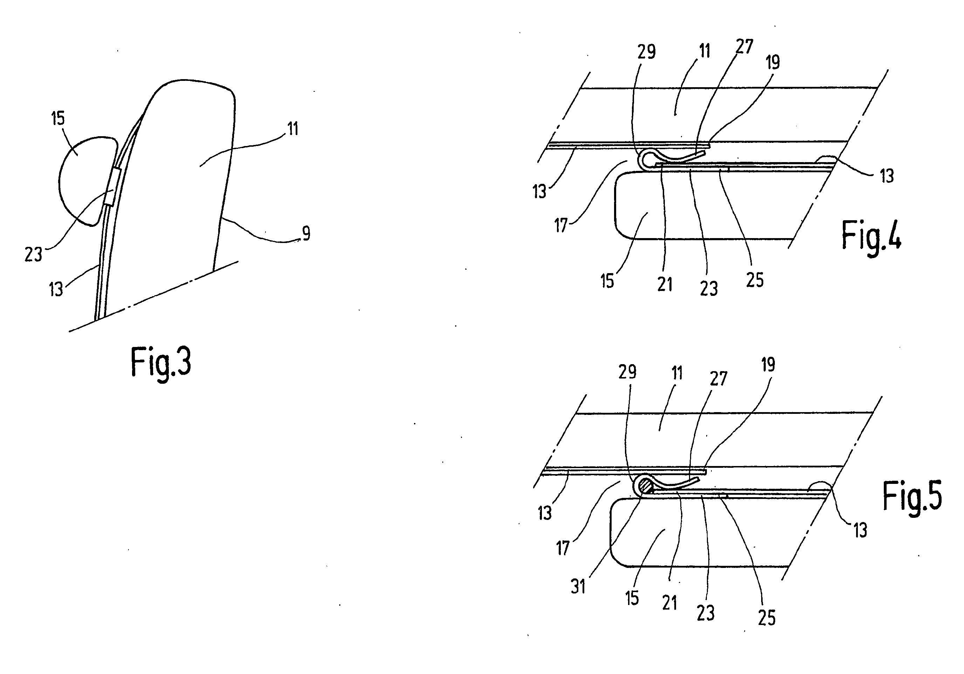

Bei dem hier zu beschreibenden Ausführungsbeispiel ist als verschiebbares Sitzzusatzteil eine Kopfstütze 15 vorgesehen, die, wie Fig. 1 und 2 zeigen, längs der Vorderseite der Rückenlehne 9 verschiebbar ist, wobei eine Verschiebung bis zum unteren Endbereich der Rückenlehne 9 möglich ist, so dass die Kopfstütze 15 bei einer derartigen, herabgeschobenen Einstellposition auch als Lordosenstütze dienen kann. Wie insbesondere Fig. 1 zeigt, sind für die Verschiebung der Kopfstütze 15 zwei Führungsbahnen 17 vorhanden, die parallel zueinander jeweils in der Nähe eines benachbarten Seitenrandes der Rückenlehne 9 verlaufen. Die Einzelheiten der in der Zeichnung links gelegenen Führungsbahn 17 sind in Fig. 4 verdeutlicht. Die gegenüberliegende, rechts gelegene Führungsbahn 17 ist spiegelbildlich entsprechend gestaltet. Wie Fig. 4 zeigt, ist die Führungsbahn 17 an einem Schlitz des das Polster 11 der Rückenlehne 9 überdeckenden Bezugsmaterials 13 ausgebildet, wobei dieser Schlitz so gestaltet ist, dass sich die an den Schlitz angrenzenden Ränder 19 und 21 des Bezugsmaterials 13 geringfügig übergreifen, so dass eine Überlappung gebildet ist, so dass der Schlitz für den Betrachter von vorn verdeckt ist.

Die eigentliche Führungsbahn für die Verschiebung der Kopfstütze 15 ist durch den jeweiligen Rand 21 an beiden Seiten desjenigen Teiles des Bezugsmaterials 13 gebildet, das sich über den Zentralbereich der Rückenlehne von Führungsbahn 17 zu Führungsbahn 17 erstreckt. Wie ebenfalls aus Fig. 4 erkennbar ist, ist an der Kopfstütze 15 eine Klemmfeder 23 in Form eines flächigen Federclips befestigt, dessen Federschenkel 25 und 27 übereinander gefaltet und über einen gerundeten Wendeteil 29 miteinander verbunden sind. Der Federschenkel 25 ist als ebener Schenkel mit der Rückseite der Kopfstütze 15 verbunden, beispielsweise durch Verkleben, Einschäumen oder dergleichen. Der zweite Federschenkel 27 ist gewölbt, wobei seine Konvexität den Rand 21 des Bezugsmaterials 13 gegen den ebenen Federschenkel 25 klemmt. Somit wird ein Reibschluß gebildet, der eine Längsverschiebung der Kopfstütze 15 entlang der Führungsbahn 17 ermöglicht, wobei die Federschenkel 25 und 27 beidseits des Randes 21 des Bezugsmaterials 13 gleiten und die Außenseite des gewölbten Federschenkels 27 längs der Vorderseite des Bezugsmaterials 13 im Bereich des Randes 19 gleitet.

Wie Fig. 3 zeigt, ist das Bezugsmaterial 13, das sich zwischen den Führungsbahnen 17 erstreckt und an seinen seitlichen Rändern 21 von der Klemmfeder 23 übergriffen ist, lediglich am oberen Endbereich und, was nicht dargestellt ist, am unteren Endbereich mit dem Polster 11 der Rückenlehne 9 verbunden, während, siehe Fig. 4, die seitlichen Teile des Bezugsmaterials 13, die sich von den seitlichen Enden der Rückenlehne 9 bis zum jeweiligen Rand 19 erstrecken, mit dem Polster 11 verbunden sind. Alternativ könnte auch das den Zentralbereich der Rückenlehne 9 überdeckende Bezugsmaterial 13 mit deren Polster 11 verbunden sein, wobei lediglich der Bereich der Ränder 21 freiliegend wäre.

Fig. 5 verdeutlicht ein zweites Ausführungsbeispiel, das sich von dem Beispiel gemäß Fig. 1 bis 4 lediglich insofern unterscheidet, als an den Rändern 21 des Bezugsmaterials 13 ein längs des jeweiligen Randes 21 verlaufender, im Querschnitt runder Keder 31 angebracht ist. Wie Fig. 5 zeigt, ist der Keder 31 vom Wendeteil 29 der Klemmfeder 23 umschlossen. Da der Keder 31 aufgrund der Wölbung des Federschenkels 27 auf einem Großteil seines Umfanges umringt ist, stellt der Keder 31 eine wirksame Diebstahlsicherung dar, die die längsverlaufende Verschiebebewegung der Kopfstütze 15 längs der Führungsbahn 17 nicht behindert, jedoch das Ausheben der Kopfstütze 15 aus der Führungsbahn 17 erschwert.

Es versteht sich, dass anstelle des gezeigten Beispieles einer lageeinstellbaren Kopfstütze/Lordosenstütze 15 Sitzzusatzteile anderer Art an Führungsbahnen betreffender Sitzkomponenten verschiebbar angeordnet und reibschlüssig festlegbar sein können.

## Patentansprüche

1. Sitz (1), insbesondere Fluggastsitz, mit als Rückenlehne (9), Sitzteil (5), Sitzrahmen oder Sitzpolster (11) ausgebildeten Sitzkomponenten, mit einem Bezugsmaterial (13) und mit einem als Kopf- und/oder Lordosenstütze, Armauflage oder Beinauflage ausgebildeten Sitzzusatzteil (15), wobei in mindestens einer der Sitzkomponenten mindestens eine Führungsbahn (17) vorhanden ist, längs der sich das Sitzzusatzteil (15) verschieben und in vorgegebenen Positionen reibschlüssig festlegen lässt und zur Bildung des Reibschlusses eine eine Klemmkraft zwischen Führungsbahn (17) und verschiebbarem Sitzzusatzteil (15) erzeugende Klemmeinrichtung (23) vorhanden ist, **dadurch gekennzeichnet, dass** eine die Klemmkraft erzeugende Klemmfeder (23) mit Federschenkeln (25, 27) vorhanden ist, die den die Führungsbahn (17) bildenden Rand (21) des Bezugsmaterials (13) zwischen sich klemmen.

2. Sitz nach Anspruch 1, **dadurch gekennzeichnet, dass** im Bezugsmaterial (13) zumindest ein in Führungsrichtung verlaufender Schlitz ausgebildet ist, dessen einer Rand (21) die Führungsbahn (17) bildet.

3. Sitz nach Anspruch 2, **dadurch gekennzeichnet, dass** sich die an den Schlitz angrenzenden Ränder (19, 21) des Bezugsmaterials (13) geringfügig übergreifen und dass der an der so gebildeten Überlappung oben liegende Rand (21) des Bezugsmaterials (13) die Führungsbahn (17) bildet.

4. Sitz nach Anspruch 1, **dadurch gekennzeichnet, dass** eine Klemmfeder (23) mit einem mit dem Sitzzusatzteil (15) verbundenen ebenen Federschenkel (25), der die Klemmkraft auf die Oberseite des von der Klemmfeder (23) übergriffenen Randes (21) des Bezugsmaterials (13) überträgt, mit einem den Rand (21) des Bezugsmaterials (13) umfassenden Wendeteil (29) und einem gewölbten zweiten Federschenkel (27) vorgesehen ist, dessen Konvexität die Klemmkraft auf die Rückseite des Randes (21) des übergriffenen Bezugsmaterials (13) überträgt.

5. Sitz nach Anspruch 4, **dadurch gekennzeichnet, dass** der gewölbte zweite Federschenkel (27) an der am Schlitz gebildeten Überlappung längs der Oberseite des überlappten Bezugsmaterials (13) verschiebbar ist.

6. Sitz nach Anspruch 4 oder 5; **dadurch gekennzeichnet, dass** entlang des von der Klemmfeder (23) übergriffenen Randes (21) des Bezugsmaterials (13) an diesem ein Keder (31) vorgesehen ist, der zumindest teilweise durch den zwischen den Federschenkeln (25, 27) befindlichen Wendeteil (29) der Klemmfeder (23) umschlossen ist

7. Sitz nach einem der Ansprüche 3 bis 6, **dadurch gekennzeichnet, dass** zwei in Längsrichtung der Rückenlehne (9) zueinander parallel verlaufende, den Seitenrändern der Rückenlehne (9) benachbarte Schlitze vorgesehen sind und dass das zwischen den Schlitzen verlaufende Bezugsmaterial (13) an der Überlappung der Schlitze das oben liegende Bezugsmaterial (13) bildet, dessen jeweiliger Rand (21) als Führungsbahn (17) für ein an beiden Schlitzen längs verschiebbar geführtes Sitzzusatzteil (15) bildet.

8. Sitz nach Anspruch 7, **dadurch gekennzeichnet, dass** das Sitzzusatzteil eine verschiebbare Kopfstütze (15) ist.

## Claims

1. Seat (1), in particular aircraft passenger seat, having seat components designed as a backrest (9), seat part (5), seat frame or seat cushion (11), having an upholstery material (13) and having an accessory seat part (15) designed as a headrest and/or lumbar support, arm-rest or leg-rest, wherein in at least one of the seat components at least one guide web (17) is being provided, along which the accessory seat part (15) can be moved and fixed in predetermined positions in a frictional manner, and with a clamping device (23), which generates a clamping force between the guide web (17) and the movable accessory seat part (15), the clamping device being provided in order to establish a friction fit, **characterized in that** a clamping spring (23) is provided which generates the clamping force and has spring legs (25, 27) which clamp an edge (21) of the upholstery material (13) which forms the guide web (17).

2. Seat according to Claim 1, **characterized in that** in the upholstery material (13), at least one slot which runs in a guide direction is formed, one edge (21) of which slot forms the guide web (17).

3. Seat according to Claim 2, **characterized in that** edges (19, 21) of the upholstery material (13) which adjoin the slot overlap slightly, and **in that** at the overlap formed in this way, an upper edge (21) of the upholstery material (13) forms the guide web (17).

4. Seat according to Claim 1, **characterized in that** a clamping spring (23) is provided with a flat spring leg (25) which is connected to the accessory seat part (15) and which transfers the clamping force to an upper side of the edge (21) of the upholstery material (13), which is engaged over by the clamping spring (23), with a turned-over part (29) which encompasses the edge (21) of the upholstery material (13), and with an arched second spring leg (27), the convexity of which transfers the clamping force to a rear side of the edge (21) of the overlapped upholstery material (13).

5. Seat according to Claim 4, **characterized in that** the arched second spring leg (27) is movable, at the overlap formed at the slot, along the upper side of the overlapped upholstery material (13).

6. Seat according to Claim 4 or 5, **characterized in that** a piping (31) is provided along the edge (21) of the upholstery material (13) which is engaged over by the clamping spring (23), and which piping (31) is surrounded at least partially by the turned-over part (29), which is situated between the spring legs (25, 27) of the clamping spring (23).

7. Seat according to one of Claims 3 to 6, **characterized in that** two slots are provided which extend parallel to one another in a longitudinal direction of the backrest (9), and are adjacent to side edges of the backrest (9), and **in that** the upholstery material (13) which runs between the slots forms the upper upholstery material (13) at the overlap of the slots, the respective edge (21) of which upper upholstery material (13) forms a guide web (17) for an accessory seat part (15) which is guided in a longitudinally movable manner in both slots.

8. Seat according to Claim 7, **characterized in that** the accessory seat part is a movable headrest (15).

## Revendications

1. Siège (1), notamment siège de passager d'avion, avec des composants de siège prenant la forme d'un dossier (9), d'une partie de siège (5), d'un cadre de siège ou d'un rembourrage de siège (11), avec un matériau de taie (13) et avec une partie d'accessoire de siège (15) prenant la forme d'un appuie-tête et/ou d'un appuie-lordose, d'un accoudoir ou d'un appuie-jambes, au moins un rail de guidage (17) étant prévu dans au moins un des composants de siège, le long duquel se déplace la partie d'accessoire de siège (15), celle-ci étant fixée par complémentarité de frottements dans des positions prédéfinies et un dispositif de serrage (23) produisant une force de serrage entre le rail de guidage (17) et la partie d'accessoire de siège (15) coulissante étant prévue pour former la complémentarité de frottements, **caractérisé en ce qu'**un ressort de serrage (23) produisant la force de serrage est pourvu de branches de ressort (25, 27) qui serrent entre elles le bord (21) du matériau de taie (13) formant le rail de guidage (17).

2. Siège selon la revendication 1, **caractérisé en ce qu'**au moins une fente s'étendant dans la direction de guidage est réalisée dans le matériau de taie (13) dont un bord (21) forme le rail de guidage (17).

3. Siège selon la revendication 2, **caractérisé en ce que** les bords (19, 21) du matériau de taie (13) connexes à la fente se chevauchent à peine et que le bord (21) du matériau de taie (13) reposant au-dessus du chevauchement ainsi formé forme le rail de guidage (17).

4. Siège selon la revendication 1, **caractérisé en ce qu'**un ressort de serrage (23) est pourvu d'une branche de ressort (25) plane reliée à la partie d'accessoire de siège (15) et transmettant la force de serrage sur le côté supérieur du bord (21) du matériau de taie (13) agrippé par le ressort de serrage (23), d'une pièce pivotante (29) comprenant le bord (21) du matériau de taie (13) d'une deuxième branche de ressort (27) incurvée dont la convexité transmet la force de serrage au côté arrière du bord (21) du matériau de taie (13) agrippé.

5. Siège selon la revendication 4, **caractérisé en ce que** la deuxième branche de ressort (27) incurvée peut être déplacée au niveau du chevauchement réalisé au niveau de la fente le long du côté supérieur du matériau de taie (13) chevauché.

6. Siège selon la revendication 4 ou 5, **caractérisé en ce qu'**un bourrelet (31) est prévu le long du bord (21) du matériau de taie (13) agrippé par le ressort de serrage (23), ledit bourrelet étant entouré au moins en partie par la pièce pivotante (29) du ressort de serrage (23) se trouvant entre les branches de ressort (25, 27).

7. Siège selon l'une quelconque des revendications 3 à 6, **caractérisé en ce que** deux fentes s'étendant parallèlement dans la direction longitudinale du dossier (9) connexes aux bords latéraux du dossier (9) sont prévues et que le matériau de taie (13) s'étendant entre les fentes forme au niveau du chevauchement des fentes le matériau de taie (13) supérieur dont le bord (21) respectif prend la forme d'un rail de guidage (17) pour une partie d'accessoire de siège (15) guidée de façon coulissante au niveau des deux fentes, le long de celles-ci.

8. Siège selon la revendication 7, **caractérisé en ce que** la partie d'accessoire de siège est un appuie-tête (15) mobile.
